# EUROPEAN PATENT APPLICATION

(11) **EP 3 597 567 A1**
(43) Date of publication of application: **22.01.2020**
(21) Application number: 17901055.8
(22) Date of filing: 07.12.2017
(51) Int. Cl.: B65G 1/137, B65G 43/08, G06Q 10/08

(54) **ACCUMULATION MANAGEMENT APPARATUS, ACCUMULATION MANAGEMENT METHOD, AND PROGRAM**

(30) Priority: 16.03.2017 JP 2017051835
(71) Applicant: NEC Corporation, Tokyo 108-8001 (JP)
(72) Inventor: KOJIMA Manabu, Tokyo 108-8001 (JP)
(74) Representative: Vossius & Partner Patentanwälte Rechtsanwälte mbB
(86) International application number: PCT/JP2017/043983
(87) International publication number: WO 2018/168113

(57) **Abstract**

An accumulation management apparatus includes an identification information acquisition unit configured to acquire identification information of accumulation targets sequentially disposed in an accumulation location, and an instruction unit configured to perform control of radiating optical information corresponding to the identification information to the accumulation targets on the basis of the identification information.

## Description

### TECHNICAL FIELD

The present invention relates to an accumulation management apparatus, an accumulation management method, and a program.

### BACKGROUND ART

In workplaces in which receiving and shipping are performed, operators perform operations of moving management targets conveyed by conveyor belts to predetermined movement destinations. A related technology is disclosed in Patent Literature 1.

### CITATION LIST

### Patent Literature

[Patent Document 1]
Japanese Unexamined Patent Application, First Publication No. 2012-229105

### SUMMARY OF INVENTION

### Problems to be solved by the Invention

In the aforementioned technology, operators are required to be able to move management targets to predetermined movement destinations more efficiently.

Accordingly, an object of the present invention is to provide an accumulation management apparatus, an accumulation management method, and a program for solving the aforementioned problem.

### Means for Solving the Problems

According to a first aspect of the present invention, an accumulation management apparatus includes an identification information acquisition unit configured to acquire identification information of accumulation targets sequentially disposed in an accumulation location, and an instruction unit configured to perform control of radiating optical information corresponding to the identification information to the accumulation targets on the basis of the identification information.

According to the first aspect of the present invention, an accumulation management method includes acquiring identification information of accumulation targets sequentially disposed in an accumulation location, and performing control of radiating optical information corresponding to the identification information to the accumulation targets on the basis of the identification information.

According to the first aspect of the present invention, a program causes a computer of an accumulation management apparatus to perform a process of acquiring identification information of accumulation targets sequentially disposed in an accumulation location and performing control of radiating optical information corresponding to the identification information to the accumulation targets on the basis of the identification information.

### Advantageous Effects of Invention

According to the present invention, it is possible to allow an operator to move management targets to predetermined movement destinations more efficiently.

### BRIEF DESCRIPTION OF DRAWINGS

Fig. 1 is a first diagram showing a configuration of an accumulation management system according to a first embodiment.
Fig. 2 is a diagram showing a hardware configuration example of an accumulation management apparatus according to the first embodiment.
Fig. 3 is a functional block diagram of the accumulation management apparatus according to the first embodiment.
Fig. 4 is a diagram showing a processing flow of the accumulation management apparatus according to the first embodiment.
Fig. 5 is a second diagram showing the configuration of the accumulation management system according to the first embodiment.
Fig. 6 is a first diagram showing a configuration of an accumulation management system according to a second embodiment.
Fig. 7 is a diagram showing a processing flow of an accumulation management apparatus according to the second embodiment.
Fig. 8 is a diagram showing minimum components of an accumulation management apparatus.

### DESCRIPTION OF EMBODIMENTS

### (First embodiment)

Hereinafter, an accumulation management apparatus according to a first embodiment will be described with reference to the drawings.

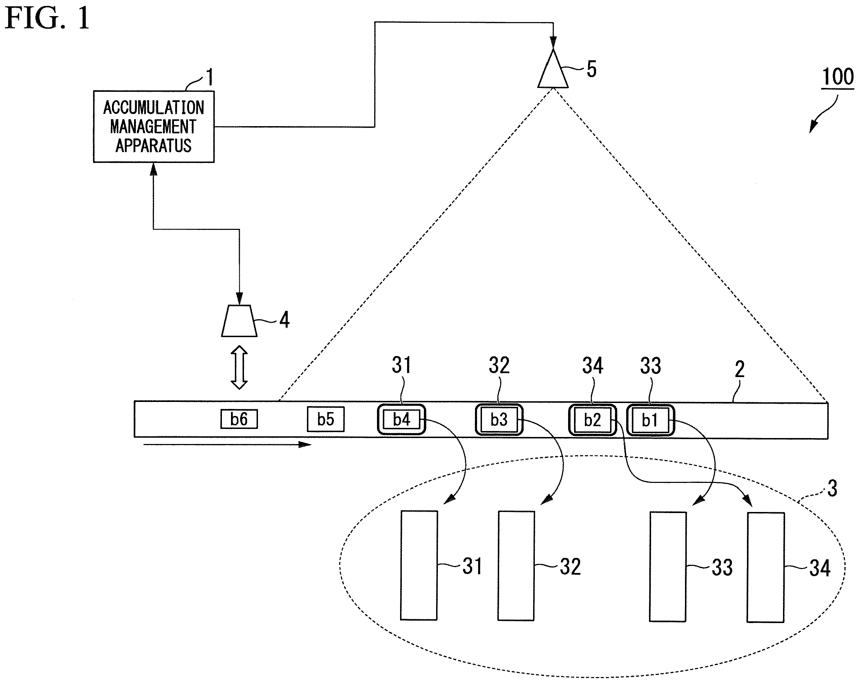

Fig. 1 is a first diagram showing a configuration of an accumulation management system according to a first embodiment.

The accumulation management system 100 shown in Fig. 1 performs a process of managing accumulation of cargoes b (b1 to b6), which are accumulation targets. The cargoes b are conveyed by a conveyor belt 2, for example, to an accumulation location 3. Accumulation locations 31 to 34 corresponding to delivery destinations are provided in the accumulation location 3. An operator moves the cargoes b conveyed to the accumulation location 3 through the conveyor belt 2 to any of accumulation locations 31 to 34 among a plurality of accumulation locations on the basis of identification information of the cargoes b.

An accumulation management apparatus 1 is connected through communication to an identification information acquisition device which acquires the identification information of the cargoes b which are accumulation targets. The accumulation management apparatus 1 receives the identification information of the cargoes b from the identification information acquisition device. In the present embodiment, the identification information acquisition device is a camera 4. The accumulation management apparatus 1 acquires images from the camera 4. Barcodes or the like indicating delivery destinations are printed on the cargoes b. Images photographed (captured) by the camera 4 include barcodes printed on the cargoes b. The accumulation management apparatus 1 detects the barcodes from the images. The accumulation management apparatus 1 instructs a light radiation device 5 to radiate optical information corresponding to delivery destinations indicated by the barcodes to the cargoes b.

The light radiation device 5 radiates light in a color of optical information corresponding to a delivery destination that corresponds to the cargo b to each cargo b carried by the conveyor belt 2 using a projection mapping technique, for example.

For example, a cargo b1 is a cargo disposed in the accumulation location 33. The cargo b2 is a cargo disposed in the accumulation location 34. The cargo b3 is a cargo disposed in the accumulation location 32. The cargo b4 is a cargo disposed in the accumulation location 31. In this case, the light radiation device 5 radiates light in a color representing the accumulation location 33 to the cargo b1 carried by the conveyor belt 2 using the projection mapping technique. The light radiation device 5 radiates light in a color representing the accumulation location 34 to the cargo b2 carried by the conveyor belt 2 using the projection mapping technique. The light radiation device 5 radiates light in a color representing the accumulation location 32 to the cargo b3 carried by the conveyor belt 2 using the projection mapping technique. The light radiation device 5 radiates light in a color representing the accumulation location 31 to the cargo b4 carried by the conveyor belt 2 using the projection mapping technique. Since the respective accumulation locations correspond to the delivery destinations of the cargoes b, colors representing the respective accumulation locations also correspond to the delivery destinations.

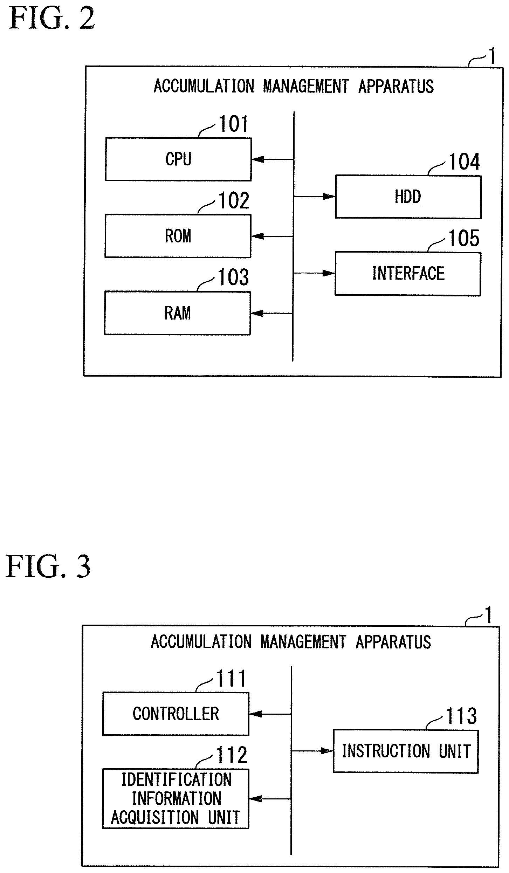

Fig. 2 is a diagram showing a hardware configuration example of the accumulation management apparatus according to the first embodiment.

As shown in Fig. 2, the accumulation management apparatus 1 may include a central processing unit (CPU) 101, a read-only memory (ROM) 102, a random-access memory (RAM) 103, an HDD (solid state drive) 104 and an interface 105 as an example of hardware components. The interface 105 may be a liquid crystal touch panel, a button or the like, for example.

Fig. 3 is a functional block diagram of the accumulation management apparatus.

The CPU 101 of the accumulation management apparatus 1 executes programs stored in advance. Accordingly, the accumulation management apparatus 1 includes functions of a controller 111, an identification information acquisition unit 112 and an instruction unit 113.

The controller 111 controls each function of the accumulation management apparatus 1.

The identification information acquisition unit 112 acquires the identification information of the cargoes b sequentially disposed in the accumulation locations 31 to 34. The identification information may be information indicating movement destinations, delivery destinations, shapes of the cargoes b, sizes of the cargoes b, identification (ID) of the cargoes b, and the like.

The instruction unit 113 performs control of radiating optical information corresponding to the identification information to the cargoes b which are accumulation objects on the basis of the identification information. The optical information is information which is represented by light, such as colors, numbers of lines, characters, images, and the like which indicate movement destinations or delivery destinations, and is radiated to the cargoes b through projection mapping, for example.

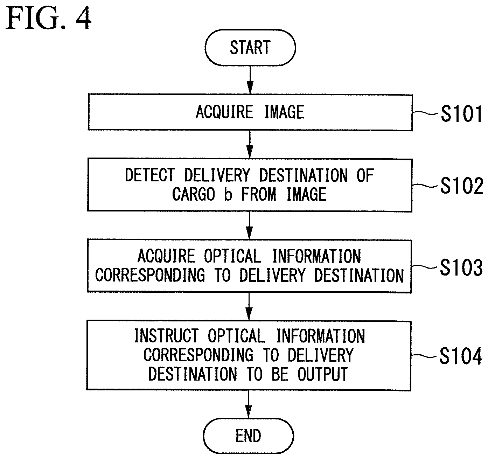

Fig. 4 is a diagram showing a processing flow of the accumulation management apparatus.

Next, the processing flow of the accumulation management apparatus 1 will be described in order.

The camera 4 photographs a cargo b which has entered a photographing range of the camera 4. The cargo b may be photographed by a plurality of cameras 4 which photograph the cargo b in different directions. The identification information acquisition unit 112 of the accumulation management apparatus 1 acquires images from one or a plurality of cameras 4 (step S101). The identification information acquisition unit 112 detects a delivery destination of the cargo b which has been photographed on the basis of the acquired images (step S102). For example, the identification information acquisition unit 112 may read barcode information included in the images and detect the delivery destination on the basis of the barcode information.

The instruction unit 113 acquires information on the delivery destination from the identification information acquisition unit 112. The instruction unit 113 acquires optical information corresponding to the delivery destination from a storage unit or the like (step S103). The instruction unit 113 instructs the light radiation device 5 to output the optical information corresponding to the delivery destination (step S104). As an example, the light radiation device 5 outputs a moving image corresponding to the delivery destination at a predetermined timing after the optical information output instruction is input. The moving image is optical information in a color corresponding to the delivery destination, and the radiation position of the moving image is moved in the movement direction of the conveyor belt 2 in accordance with the moving speed of the cargo b which is a radiation target on the conveyor belt 2. A timing, at which the cargo that is a radiation target enters an optical information radiation range after being photographed by the camera 4 is stored, in advance in the light radiation device 5. The light radiation device 5 outputs the moving image indicating the optical information in the color corresponding to the delivery destination of the cargo which is a radiation target from the timing. Accordingly, light corresponding to the delivery destination of the cargo b is radiated to the cargo b according to the light radiation device 5 while the cargo b is carried by the conveyor belt 2.

An operator is located in each accumulation location. In addition, the accumulation locations 31 to 34 are accumulation locations corresponding to delivery destinations, respectively, as described above.

When a cargo b, to which light in a color of a delivery destination corresponding to the accumulation location 31 has been radiated, has been conveyed by the conveyor belt 2 to the vicinity of an operator located in the accumulation location 31, the operator picks up the cargo b from the conveyor belt 2 and disposes the cargo b in the accumulation location 31.

When a cargo b, to which light in a color of a delivery destination corresponding to the accumulation location 32 has been radiated, has been conveyed by the conveyor belt 2 to the vicinity of an operator located in the accumulation location 32, the operator picks up the cargo b from the conveyor belt 2 and disposes the cargo b in the accumulation location 32.

When the cargo b, to which light in a color of a delivery destination corresponding to the accumulation location 33 has been radiated, has been conveyed by the conveyor belt 2 to the vicinity of an operator located in the accumulation location 33, the operator picks up the cargo b from the conveyor belt 2 and disposes the cargo b in the accumulation location 33.

When a cargo b, to which light in a color of a delivery destination corresponding to the accumulation location 34 has been radiated, has been conveyed by the conveyor belt 2 to the vicinity of the operator located in the accumulation location 34, the operator picks up the cargo b from the conveyor belt 2 and disposes the cargo b in the accumulation location 34.

The accumulation management apparatus 1 detects delivery destinations for all cargoes b photographed by the camera 4 in the same manner. In addition, the accumulation management apparatus 1 instructs the light radiation device 5 to radiate optical information corresponding to delivery destinations of cargoes b to all cargoes b. Accordingly, the light radiation device 5 radiates light in colors represented by optical information to all cargoes b conveyed by the conveyor belt 2 through projection mapping.

The moving speed and movement positions of the cargoes b conveyed by the conveyor belt 2 are fixed. Accordingly, the light radiation device 5 can easily radiate optical information corresponding to a delivery destination to each cargo b if it can detect a timing at which each cargo enters the radiation range.

Fig. 1 shows a case in which color information of a delivery destination corresponding to the accumulation location 33 is radiated to the cargo b1 conveyed by the conveyor belt 2 and color information of a delivery destination corresponding to the accumulation location 34 is radiated to the cargo b2 conveyed by the conveyor belt 2. In the same manner, Fig. 1 shows a case in which color information of a delivery destination corresponding to the accumulation location 32 is radiated to the cargo b3 and color information of a delivery destination corresponding to the accumulation location 31 is radiated to the cargo b4.

According to the above-described process of the accumulation management apparatus 1, an operator can recognize delivery destinations of cargoes b conveyed by the conveyor belt 2 with high efficiency according to optical information radiated to the cargoes b without checking the addresses and the like of the cargoes b. Accordingly, the operator can efficiently move cargoes which are accumulation targets to predetermined movement destinations (accumulation locations in the present embodiment).

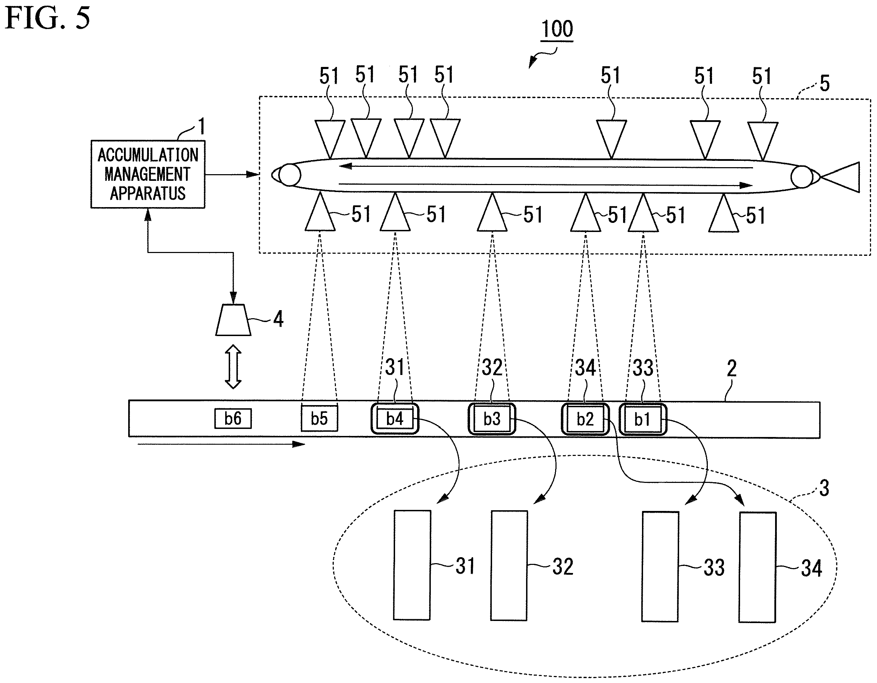

Fig. 5 is a second diagram showing a configuration of the accumulation management system according to the first embodiment.

The light radiation device 5 shown in Fig. 5 includes a plurality of lights 51. Each light 51 is conveyed by a conveyance mechanism in the same direction as that of cargoes b at the same speed as that of the conveyor belt 2 above the conveyor belt 2. The light radiation device 5 shown in Fig. 5 forwards each light 51 that radiates light in a color corresponding to optical information indicating a delivery destination of each cargo b through the conveyance mechanism on the basis of an instruction from the accumulation management apparatus 1. Each light 51 forwarded by the conveyance mechanism emits light in a color indicating a delivery destination of a cargo b corresponding thereto. It is desirable that the lights 51 be able to emit light in a plurality of colors. Accordingly, the lights 51 moved by the conveyance mechanism above cargoes b radiate light in colors corresponding to delivery destinations of the cargoes b to the cargoes b while the cargoes b are being conveyed by the conveyor belt 2.

The light radiation device 5 included in the accumulation management system 100 may be a device such as the light radiation device 5 shown in Fig. 5 instead of the light radiation device 5 shown in Fig. 1.

### (Second embodiment)

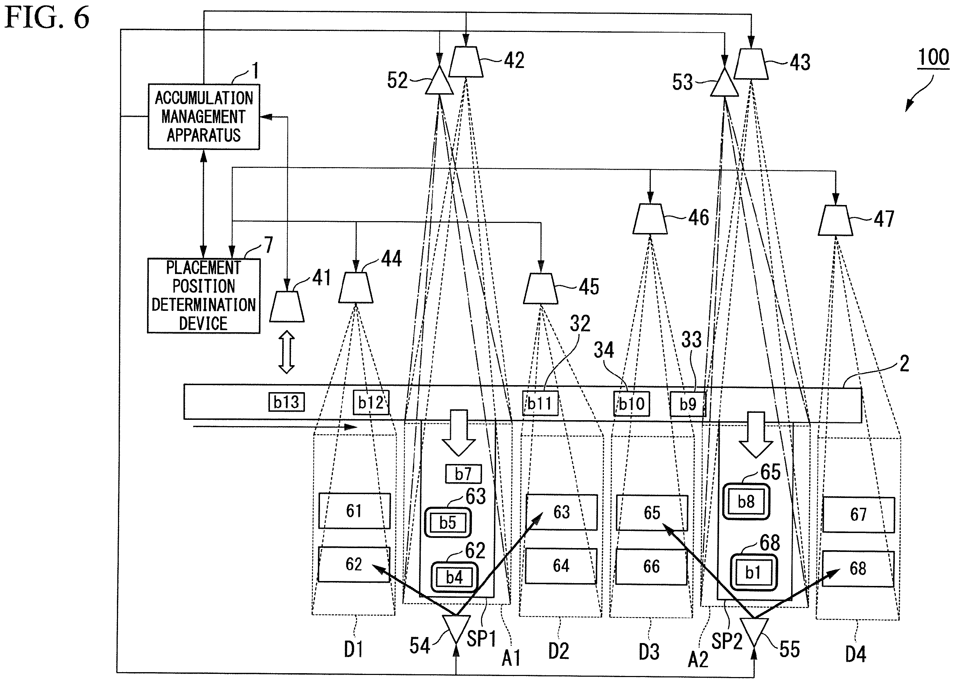

Fig. 6 is a first diagram showing a configuration of an accumulation management system according to a second embodiment.

The accumulation management system 100 shown in Fig. 6 also performs a process of managing accumulation of cargoes b (b1 to b13) which are accumulation targets as in the first embodiment. The cargoes b in the second embodiment are conveyed to an accumulation location SP1 or an accumulation location SP2 through the conveyor belt 2. It is desirable that the conveyor belt 2 have a configuration in which the conveyor belt 2 is branched such that cargoes b that are targets are conveyed in the direction of the accumulation location SP1. In the same manner, it is desirable that the conveyor belt 2 have a configuration in which the conveyor belt 2 is branched such that cargoes b that are targets are conveyed in the direction of the accumulation location SP2. The accumulation locations SP1 and SP2 are accumulation locations corresponding to delivery destinations of the cargoes b. For example, cargoes b to be delivered to a first zone are accumulated in the accumulation location SP1. Cargoes b to be delivered to a second zone are accumulated in the accumulation location SP2.

There are spaces in which carriages 61, 62, 63 and 64 are disposed near the accumulation location SP1. Cargoes b to be delivered to a first city included in the first zone are loaded on the carriage 61. Cargoes b to be delivered to a second city included in the first zone are loaded on the carriage 62. Cargoes b to be delivered to a third city included in the first zone are loaded on the carriage 63. Cargoes b to be delivered to a fourth city included in the first zone are loaded on the carriage 64.

There are spaces in which carriages 65, 66, 67 and 68 are disposed near the accumulation location SP2. Cargoes b to be delivered to a fifth city included in the second zone are loaded on the carriage 65. Cargoes b to be delivered to a sixth city included in the second zone are loaded on the carriage 66. Cargoes b to be delivered to a seventh city included in the second zone are loaded on the carriage 67. Cargoes b to be delivered to an eighth city included in the second zone are loaded on the carriage 68.

In the present embodiment, accumulation locations are areas on the carriages 61 to 68 and refer to areas in which cargoes b are accumulated.

A first operator performs an operation of loading a cargo b which has been conveyed to the accumulation location SP1 through the conveyor belt 2 on any of the carriages 61 to 64 on the basis of a delivery destination indicated by identification information of the cargo b.

A second operator performs an operation of loading a cargo b which has been conveyed to the accumulation location SP2 through the conveyor belt 2 on any of the carriages 65 to 68 on the basis of a delivery destination indicated by identification information of the cargo b.

The accumulation management apparatus 1 is connected through communication to identification information acquisition devices which acquire identification information of cargoes b which are accumulation targets. The accumulation management apparatus 1 receives identification information of the cargoes b from the identification information acquisition devices. In the present embodiment, the identification information acquisition devices are cameras 41, 42 and 43. The accumulation management apparatus 1 acquires an image 410 from the camera 41. Barcodes or the like indicating delivery destinations are printed on the cargoes b. The image photographed by the camera 41 includes barcodes printed on the cargoes b. The accumulation management apparatus 1 acquires the barcodes. The accumulation management apparatus 1 controls the conveyor belt 2 to convey the cargoes b to the accumulation location SP1 and the accumulation location SP2 corresponding to delivery destinations indicated by the barcodes. When a delivery destination of a cargo b indicates a city included in the first zone, the accumulation management apparatus 1 controls the conveyor belt 2 to move the cargo b to the accumulation location SP1. When a delivery destination of a cargo b indicates a city included in the second zone, the accumulation management apparatus 1 controls the conveyor belt 2 to move the cargo b to the accumulation location SP2. Control of the conveyor belt 2 according to delivery destinations of cargoes b may be performed by a conveyor belt control device other than the accumulation management apparatus 1.

The camera 42 photographs a temporary placement area A1 in which cargoes b that have been moved to the accumulation location SP1 are temporarily disposed. Cargoes disposed in the temporary placement area A1 may be photographed by a plurality of cameras 42 which photograph cargoes b in different directions. The accumulation management apparatus 1 acquires an image 420 from the camera 42. The accumulation management apparatus 1 acquires barcodes printed on cargoes b shown in the image 420. The accumulation management apparatus 1 instructs a light radiation device 52 to radiate optical information corresponding to delivery destinations indicated by the barcodes to the cargoes b. Specifically, the accumulation management apparatus 1 controls the light radiation device 52 such that light in a color corresponding to any of the first to fourth cities in the first zone indicated by the barcodes is radiated to each cargo b disposed in the temporary placement area A1.

Like the camera 42, the camera 43 photographs a temporary placement area A2 in which cargoes b that have been moved to the accumulation location SP2 are temporarily disposed. Cargoes disposed in the temporary placement area A2 may be photographed by a plurality of cameras 43 which photograph cargoes b in different directions. The accumulation management apparatus 1 acquires an image 430 from the camera 43. The accumulation management apparatus 1 acquires barcodes printed on cargoes b shown in the image 430. The accumulation management apparatus 1 instructs a light radiation device 53 to radiate optical information corresponding to delivery destinations indicated by the barcodes to the cargoes b. Specifically, the accumulation management apparatus 1 controls the light radiation device 53 such that light in a color corresponding to any of the fifth to eighth cities in the second zone indicated by the barcodes is radiated to each cargo b disposed in the temporary placement area A2.

The light radiation devices 52 and 53 radiate light such that optical information according to a delivery destination corresponding to each cargo b disposed in the accumulation location SP1 or the accumulation location SP2 is superposed on the cargo b using the projection mapping technique.

For example, a cargo b1 is a cargo to be delivered to the eighth city in the second zone. In this case, the light radiation device 53 radiates light in a color indicating the eighth city to the cargo b1 disposed in the accumulation location SP2 using the projection mapping technique.

A cargo b4 is a cargo to be delivered to the second city in the first zone. In this case, the light radiation device 52 radiates light in a color indicating the second city to the cargo b4 disposed in the accumulation location SP1 using the projection mapping technique.

A cargo b5 is a cargo to be delivered to the third city in the first zone. In this case, the light radiation device 52 radiates light in a color indicating the third city to the cargo b5 disposed in the accumulation location SP1 using the projection mapping technique.

A cargo b8 is a cargo to be delivered to the fifth city in the second zone. In this case, the light radiation device 53 radiates light in a color indicating the fifth city to the cargo b8 disposed in the accumulation location SP2 using the projection mapping technique.

In addition, the accumulation management apparatus 1 requests a placement position determination device 7 to determine a placement position of each cargo b on carriages 61 to 64 according to a delivery destination of each cargo b shown in the image 420. With respect to this request, the accumulation management apparatus 1 outputs information such as the delivery destination, shape and size of one of cargoes b shown in the image 420 to the placement position determination device 7. The camera 44 photographs placement positions of cargoes b on the carriages 61 and 62. The camera 45 photographs placement positions of cargoes b on the carriages 63 and 64. The placement position determination device 7 acquires an image 440 of a carriage area D1 from the camera 44 and acquires an image 450 of a carriage area D2 from the camera 45. The placement position determination device 7 determines placement positions of cargoes b in any of the carriages 61 to 64 in which the cargoes b will be disposed, on the basis of cargo information, the image 440 or the image 450, the cargo information being such as delivery destinations, shapes and sizes of the cargoes b acquired from the accumulation management apparatus 1. Determination of new cargo placement positions based on cargo information on cargoes b and current cargo placement position states on carriages in the placement position determination device 7 may be performed by a known technique.

The accumulation management apparatus 1 in the present embodiment is described on the assumption that the placement position determination device 7 determines cargo placement positions on carriages. Meanwhile, the accumulation management apparatus 1 may include a placement position determination unit which performs the same process as that of the placement position determination device 7 and cause the placement position determination unit to perform the process of the placement position determination device 7.

When placement positions on carriages have been determined on the basis of delivery destinations of cargoes b positioned in the accumulation location SP1, the accumulation management apparatus 1 controls a light radiation device 54. That is, the accumulation management apparatus 1 controls the light radiation device 54 such that optical information related to optical information which has already been radiated from the light radiation device 52 to a cargo b is radiated to the placement position of the cargo b on a carriage.

For example, color information representing a color of the second city of the first zone which is a delivery destination is radiated to the cargo b4 positioned in the accumulation location SP1. When a placement position in a load area of the carriage 62 has been determined with respect to the cargo b4, the accumulation management apparatus 1 controls the light radiation device 54 such that the color information representing the color of the second city is radiated to the placement position of the cargo b4. Accordingly, the first operator disposes the cargo b4 at the determined placement position in the load area of the carriage 62.

In addition, color information representing a color of the third city of the first zone which is a delivery destination is radiated to the cargo b5 positioned in the accumulation location SP1. When a placement position in a load area of the carriage 63 has been determined with respect to the cargo b5, the accumulation management apparatus 1 controls the light radiation device 54 such that the color information representing the color of the third city is radiated to the placement position of the cargo b5. Accordingly, the first operator disposes the cargo b5 at the determined placement position in the load area of the carriage 63.

Further, the accumulation management apparatus 1 requests the placement position determination device 7 to determine a placement position of each cargo b on carriages 65 to 68 according to a delivery destination of each cargo b shown in the image 430. With respect to this request, the accumulation management apparatus 1 outputs information such as the delivery destination, shape and size of one of cargoes b shown in the image 430 to the placement position determination device 7. A camera 46 photographs placement positions of cargoes b on the carriages 65 and 66. A camera 47 photographs placement positions of cargoes b on the carriages 67 and 68. The placement position determination device 7 acquires an image 460 from the camera 46 and acquires an image 470 from the camera 47. The placement position determination device 7 determines placement positions of cargoes b on any of the carriages 65 to 68 in which the cargoes b will be disposed on the basis of cargo information such as delivery destinations, shapes and sizes of the cargoes b acquired from the accumulation management apparatus 1, the image 460 or the image 470. Determination of new cargo placement positions based on cargo information on cargoes b and current cargo placement position states on carriages in the placement position determination device 7 may be performed by a known technique.

When placement positions on carriages have been determined on the basis of delivery destinations of cargoes b positioned in the accumulation location SP2, the accumulation management apparatus 1 controls a light radiation device 55. That is, the accumulation management apparatus 1 controls the light radiation device 55 such that optical information related to optical information which has already been radiated from the light radiation device 53 to a cargo b is radiated to the placement position of the cargo b on a carriage on which the cargo b is to be placed.

For example, color information representing a color of the eighth city of the second z0 one which is a delivery destination is radiated to the cargo b1 located at the accumulation location SP2. When a placement position in a load area of the carriage 68 has been determined with respect to the cargo b1, the accumulation management apparatus 1 controls the light radiation device 55 such that the color information representing the color of the eighth city is radiated to the placement position. Accordingly, the second operator disposes the cargo b1 at the determined placement position in the load area of the carriage 68.

In addition, color information representing a color of the fifth city of the second zone which is a delivery destination is radiated to the cargo b8 located at the accumulation location SP2. When a placement position in a load area of the carriage 65 has been determined with respect to the cargo b8, the accumulation management apparatus 1 controls the light radiation device 55 such that the color information representing the color of the fifth city is radiated to the placement position. Accordingly, the second operator disposes the cargo b8 at the determined placement position in the load area of the carriage 65.

A hardware configuration of the accumulation management apparatus 1 according to the second embodiment is the same as that of the first embodiment. Further, the accumulation management apparatus 1 according to the second embodiment includes the same functional units as those of the accumulation management apparatus 1 according to the first embodiment.

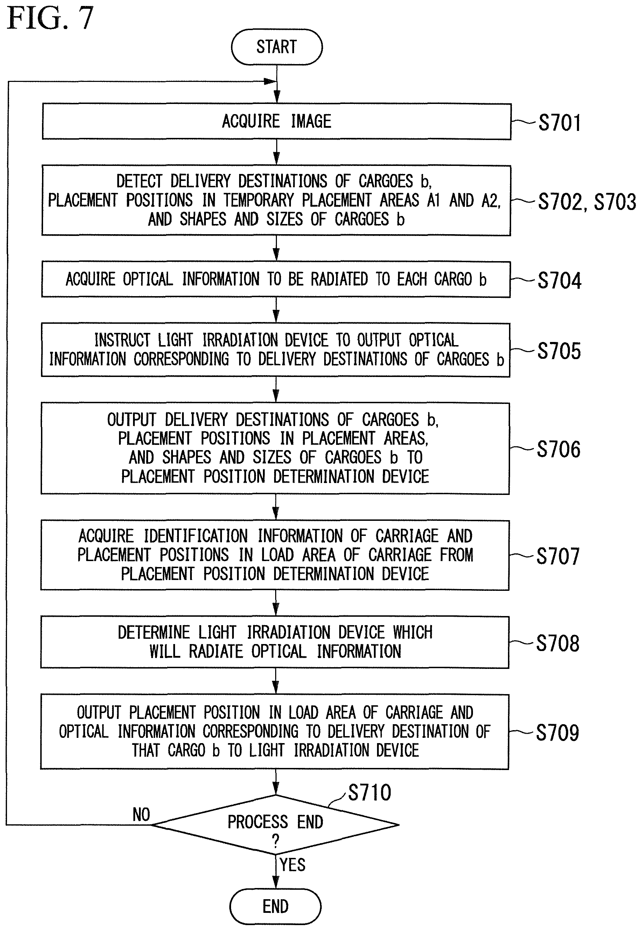

Fig. 7 is a diagram showing a processing flow of the accumulation management apparatus according to the second embodiment.

Next, the processing flow of the accumulation management apparatus 1 will be described in order.

The camera 41 photographs cargoes b which have entered a photographing range thereof. The cargoes b may be photographed by a plurality of cameras 41 which photograph cargoes b in different directions. The identification information acquisition unit 112 of the accumulation management apparatus 1 acquires images from one or a plurality of cameras 41. The identification information acquisition unit 112 detects delivery destinations of the cargoes b which have been photographing objects from the acquired images. For example, the identification information acquisition unit 112 may read barcode information included in the images and detect the delivery destinations on the basis of the barcode information.

The controller 111 of the accumulation management apparatus 1 moves the cargoes b1 to the accumulation location SP1 or the accumulation location SP2 corresponding to the delivery destinations by controlling the conveyor belt 2 according to the delivery destinations. Each cargo b is automatically moved by the conveyor belt 2 to the accumulation location SP1 or the accumulation location SP2.

The camera 42 photographs cargoes b which have entered the temporary placement area A1 thereof. The cargoes b may be photographed by a plurality of cameras 42 which photograph cargoes b in different directions. One or a plurality of cameras 42 photograph the temporary placement area A1 in which cargoes b that have moved to the accumulation location SP1 are temporarily disposed to generate the image 420. The camera 42 outputs the image 420 to the accumulation management apparatus 1. The camera 43 photographs cargoes b which have entered the temporary placement area A2 thereof. The cargoes b may be photographed by a plurality of cameras 43 which photograph cargoes b in different directions. One or a plurality of cameras 43 photograph the temporary placement area A2 in which cargoes b that have moved to the accumulation location SP2 are temporarily disposed to generate the image 430. The camera 43 outputs the image 430 to the accumulation management apparatus 1. The identification information acquisition unit 112 of the accumulation management apparatus 1 acquires the image 420 or the image 430 from the camera 42 or the camera 43 (step S701).

The identification information acquisition unit 112 of the accumulation management apparatus 1 detects delivery destinations of one or a plurality of cargoes b shown in the image 420, and placement positions of the cargoes b and the shapes and sizes of the cargoes b in the temporary placement area A1 on the basis of the image 420 (step S702). The identification information acquisition unit 112 of the accumulation management apparatus 1 detects delivery destinations of one or a plurality of cargoes b shown in the image 430, and placement positions of cargoes b and the shapes and sizes of the cargoes b in the temporary placement area A2 on the basis of the image 430 (step S703). As in the first embodiment, the identification information acquisition unit 112 reads barcode information included in the images 420 and 430 and detects delivery destinations on the basis of the barcode information. The identification information acquisition unit 112 outputs, to the instruction unit 113, delivery destinations of cargoes b, placement area identification information representing the placement area A1 or the placement area A2 in which the cargoes b are disposed, and specific coordinates (coordinates in the image) of placement positions of the cargoes b in the placement area A1 or A2, that are detected on the basis of each of the images 420 and 430. The identification information acquisition unit 112 may estimate, on the basis of colors and pixel ranges of the cargoes b shown in one or a plurality of images 420 and 430, shapes and sizes of cargoes b.

The instruction unit 113 acquires optical information radiated to each cargo b disposed in the placement area A1 or the placement area A2 from a storage unit or the like on the basis of the delivery destinations of the cargoes b (step S704). This optical information may be information on a color corresponding to a delivery destination, for example. The instruction unit 113 instructs the light radiation device 52 or the light radiation device 53 to output optical information corresponding to delivery destinations of cargoes b on the basis of the delivery destinations of the cargoes b, placement area identification information, coordinates of placement positions, and optical information (step S705).

Specifically, the instruction unit 113 determines the light radiation device 52 or the light radiation device 53 to which an instruction will be output on the basis of placement area identification information (the placement area A1 or the placement area A2). The instruction unit 113 outputs coordinates of placement positions of cargoes b and optical information to a light radiation device which is a target to which the instruction will be output between the light radiation device 52 and the light radiation device 53. The light radiation device 52 or the light radiation device 53 radiates light corresponding to the optical information to the coordinates of the placement positions based on the instruction from the instruction unit 113.

In addition, the instruction unit 113 outputs the delivery destinations of the cargoes b, placement positions of the cargoes b in the placement area A1 or the placement area A2, and the shapes and the sizes of the cargoes b, which are detected from the image 420 or the image 430, to the placement position determination device 7 (step S706).

The placement position determination device 7 acquires the captured image 440 of the carriage area D1 including load placement states of the carriages 61 and 62 in a photographing range, which has been photographed by the camera 44. The placement position determination device 7 acquires the captured image 450 of the carriage area D2 including load placement states of the carriages 63 and 64 in a photographing range, which has been photographed by the camera 45. The placement position determination device 7 acquires the captured image 460 of a carriage area D3 including load placement states of the carriages 65 and 66 in a photographing range, which has been photographed by the camera 46. The placement position determination device 7 acquires the captured image 470 of a carriage area D4 including load placement states of the carriages 67 and 68 in a photographing range, which has been photographed by the camera 47.

The placement position determination device 7 calculates placement positions of the cargoes b in load areas of carriages on the basis of the delivery destinations, shapes and sizes of the cargoes b received from the instruction unit 113, and the images 440 to 470 acquired from the cameras 44 to 47. The cargoes b may already be loaded on the carriages 61 to 68.

In such a case, the placement position determination device 7 has stored delivery destinations, shapes and sizes of cargoes, and placement positions on carriages which have been calculated in the past. Further, the images 440 to 470 show placement states of cargoes b which have already been loaded on the carriages 61 to 68. The placement position determination device 7 calculates a carriage which is a target of placement of a cargo b acquired from the instruction unit 113, and a position (coordinates) in the load area of the carriage, at which the cargo will be disposed, on the basis of the stored placement position of each cargo b which has already been loaded on each of the carriages 61 to 68, the images 440 to 470, and the delivery destinations, shape and sizes of the cargoes b acquired from the instruction unit 113.

Meanwhile, a process of determining, on the basis of a disposed-area in which an object has already been disposed and the size and volume (height) of an object which will be disposed in that area, a position of an object to be disposed in that area uses a known technique. The placement position determination device 7 outputs identification information of carriages on which the cargoes b will be loaded, acquired from the instruction unit 113, and placement positions (coordinates) on the carriages to the accumulation management apparatus 1.

The instruction unit 113 of the accumulation management apparatus 1 acquires the identification information of the carriages and the placement positions in the load areas of the carriages from the placement position determination device 7 (step S707). The instruction unit 113 determines any of the corresponding light radiation devices 54 and 55 as a device which will radiate light in a color corresponding to optical information on the basis of the identification information of the carriages (carriages 61 to 68) (step S708). In the case of the carriages 61 to 64, the instruction unit 113 determines the light radiation device 54 as a device which will radiate light in a color corresponding to optical information. In addition, in the case of the carriages 65 to 68, the instruction unit 113 determines the light radiation device 55 as a device which will radiate light in a color corresponding to optical information. The instruction unit 113 outputs the placement positions in the load areas of the carriages and the optical information acquired in step S704 on the basis of the delivery destinations of the cargoes b to the light radiation device 54 or the light radiation device 55 on the basis of the determination (step S709). The light radiation device 54 or the light radiation device 55 outputs light represented by the optical information to the placement positions in the load areas of the carriages according to an instruction from the accumulation management apparatus 1.

Accordingly, light in a color corresponding to the delivery destination of the cargo b4 in the placement area A1 is radiated to the cargo b4 and light in a color corresponding to the delivery destination of the cargo b4 is radiated to the placement position of the cargo b4 on the carriage 62 which is a placement destination of the cargo b4. An operator disposes, on the basis of the color of the light radiated to the cargo b4 and the color of the light radiated to the placement position on the carriage 62, the cargo b4 at the placement position on the carriage 62 to which the same light is radiated.

Likewise, light in a color corresponding to the delivery destination of the cargo b5 in the placement area A1 is radiated to the cargo b5 and light in a color corresponding to the delivery destination of the cargo b5 is radiated to the placement position of the cargo b5 on the carriage 63 which is a placement destination of the cargo b5. An operator disposes, on the basis of the color of the light radiated to the cargo b5 and the color of the light radiated to the placement position on the carriage 63, the cargo b5 at the placement position on the carriage 63 to which the same light is radiated.

Similarly, light in a color corresponding to the delivery destination of the cargo b1 in the placement area A2 is radiated to the cargo b1 and light in a color corresponding to the delivery destination of the cargo b1 is radiated to the placement position of the cargo b1 on the carriage 68 which is a placement destination of the cargo b1. An operator disposes, on the basis of the color of the light radiated to the cargo b1 and the color of the light radiated to the placement position on the carriage 68, the cargo b1 at the placement position on the carriage 68 to which the same light is radiated.

Likewise, light in a color corresponding to the delivery destination of the cargo b8 in the placement area A2 is radiated to the cargo b8 and light in a color corresponding to the delivery destination of the cargo b8 is radiated to the placement position of the cargo b8 on the carriage 65 which is a placement destination of the cargo b8. An operator disposes, on the basis of the color of the light radiated to the cargo b8 and the color of the light radiated to the placement position on the carriage 65, the cargo b8 at the placement position on the carriage 65 to which the same light is radiated.

The controller 111 determines whether the process ends (step S710). When the process has not ended, the accumulation management apparatus 1 repeats the process from step S701.

Accordingly, an operator can dispose a cargo b which has been moved by the conveyor belt 2 and disposed in the placement area A1 or A2 at a predetermined position in a load area of a certain carriage which is a predetermined accumulation location. It is desirable that the operator be able to dispose the cargo b at a placement position in a carriage determined on the basis of the shape and size of the cargo b by the placement position determination device 7. Accordingly, it is possible to reduce the efforts of an operation of loading the cargo b on the carriage.

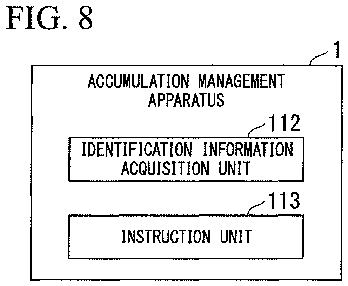

Fig. 8 is a diagram showing minimum components of the accumulation management apparatus.

As shown in this figure, it is desirable that the accumulation management apparatus 1 include at least the identification information acquisition unit 112 and the instruction unit 113. The identification information acquisition unit 112 acquires identification information of accumulation targets which are sequentially disposed in an accumulation location. The instruction unit 113 performs control of radiating optical information corresponding to the identification information to the accumulation objects on the basis of the identification information.

Meanwhile, identification information of a cargo b, such as the delivery destination, the shape and the size of the cargo b, is identified on the basis of images captured by the cameras 4, 41, 42 and 43 in each embodiment. However, an RFID tag may be attached to the cargo b. In this case, the RFID tag transmits identification information and an ID reading device which is an example of the identification information acquisition device reads the identification information transmitted from the RFID tag instead of the cameras. In addition, the identification information acquisition device may transmit the identification information to the accumulation management apparatus 1 and the accumulation management apparatus 1 may acquire identification information of the cargo b, such as the delivery destination, shape and size of the cargo b, on the basis of the identification information. In this case, the cargo b may be fixed to and disposed at a predetermined position or the like. Accordingly, if a light irradiation device radiates light in a color corresponding to optical information to the predetermined position, optical information corresponding to the delivery destination of the cargo b is radiated to the cargo b.

Meanwhile, the identification information acquisition unit 112 may acquire, on the basis of acquired identification information, delivery destination and shape information indicated by the identification information from other devices connected through a communication network.

The above-described accumulation management apparatus includes a computer system. In addition, a program for causing the accumulation management apparatus to perform the aforementioned processes is stored in a computer-readable recording medium of the accumulation management apparatus, and the processes are performed by a computer of the accumulation management apparatus reading and executing the program. Here, the computer-readable recording medium refers to a magnetic disk, a magneto-optic disk, a CD-ROM, a DVD-ROM, a semiconductor memory or the like. Further, this computer program may be delivered to a computer through a communication line and the computer which has received the delivery may execute the program.

In addition, the aforementioned program may be a program for realizing some of functions of the above-described processing units. Further, the program may be a so-called difference file (difference program) which can be realized by combining the above-described functions with a program which has already been recorded in a computer system.

Priority is claimed on Japanese Patent Application No. 2017-051835, filed March 16, 2017, the content of which is incorporated herein by reference.

### INDUSTRIAL APPLICABILITY

According to the present invention, an operator can efficiently move management targets to a predetermined movement destination.

### [Reference Signs List]

1 Accumulation management apparatus
2 Conveyor belt
4, 41 to 47 Camera
5, 51 to 55 Light radiation device
7 Placement position determination device
111 Controller
112 Identification information acquisition unit
113 Instruction unit
101 CPU
102 ROM
103 RAM
104 HDD
105 Interface

## Claims

1. An accumulation management apparatus, comprising:
an identification information acquisition unit configured to acquire identification information of accumulation targets sequentially disposed in an accumulation location; and
an instruction unit configured to perform control of radiating optical information corresponding to the identification information to the accumulation targets on the basis of the identification information.

2. The accumulation management apparatus according to Claim 1, wherein the identification information represents movement destinations of the accumulation targets, and the instruction unit performs the control of radiating the optical information corresponding to the movement destinations to the accumulation targets on the basis of the movement destinations of the accumulation targets.

3. The accumulation management apparatus according to Claim 2, wherein the movement destinations are delivery destinations of the accumulation targets.

4. The accumulation management apparatus according to any one of Claims 1 to 3, further comprising a placement position determination unit configured to determine placement positions of the accumulation targets in the accumulation location in which the accumulation targets are disposed on the basis of delivery destinations and shape information of the accumulation targets represented by the identification information acquired by the identification information acquisition unit.

5. The accumulation management apparatus according to Claim 4, wherein the instruction unit performs the control of radiating the optical information to the placement positions in the accumulation location acquired by the placement position determination unit.

6. The accumulation management apparatus according to Claim 4 or 5, further comprising an image acquisition unit configured to acquire captured images of the accumulation targets sequentially disposed in the accumulation location,
wherein the identification information acquisition unit acquires the delivery destinations and the shape information represented by the identification information on the basis of the images.

7. The accumulation management apparatus according to Claim 4 or 5, wherein the identification information acquisition unit acquires the delivery destinations and the shape information represented by the identification information from other devices.

8. An accumulation management method, comprising:
acquiring identification information of accumulation targets sequentially disposed in an accumulation location; and
performing control of radiating optical information corresponding to the identification information to the accumulation targets on the basis of the identification information.

9. A program causing a computer of an accumulation management apparatus to perform a process of:
acquiring identification information of accumulation targets sequentially disposed in an accumulation location; and
performing control of radiating optical information corresponding to the identification information to the accumulation targets on the basis of the identification information.
